# FASCICULE DE BREVET EUROPEEN

(11) **EP 4 453 404 B1**
(45) Date de publication et mention de la délivrance du brevet: **04.02.2026**
(21) Numéro de dépôt: 22850657.2
(22) Date de dépôt: 21.12.2022
(51) Int. Cl.: F02K 9/42, F02K 9/78

(54) **SYSTEME ET PROCEDE DE CONDITIONNEMENT DE CARBURANT POUR MOTEUR AEROBIE A HYDROGENE**
SYSTEM UND VERFAHREN ZUR KONDITIONIERUNG VON KRAFTSTOFF FÜR EINEN LUFTATMENDEN WASSERSTOFFMOTOR
SYSTEM AND METHOD FOR CONDITIONING FUEL FOR AN AIR-BREATHING HYDROGEN ENGINE

(30) Priorité: 23.12.2021 FR 2114405
(43) Date de publication de la demande: 30.10.2024
(73) Titulaire: ARIANEGROUP SAS, 78130 Les Mureaux (FR); AIRBUS OPERATIONS, 31060 Toulouse (FR); SAFRAN, 75015 Paris (FR)
(72) Inventeur: MABILLE DE LA PAUMELIERE, Louis Vianney, 27207 VERNON CEDEX (FR); GUEZENNEC, Nicolas, 27207 VERNON CEDEX (FR); CRUZ, Carlos Alberto, 27207 VERNON CEDEX (FR); BELLEVILLE, Mathieu, 31060 TOULOUSE (FR); MAALOUF, Samer, 91300 MASSY (FR)
(74) Mandataire: Cabinet Beau de Loménie
(86) Numéro de dépôt international: PCT/FR2022/052456
(87) Numéro de publication internationale: WO 2023/118743

(56) Documents cités:
- EP-A1- 1 172 544
- FR-A1- 2 599 428
- US-A1- 2021 310 442

## Description

### Domaine Technique

Le présent exposé concerne un système et un procédé de conditionnement de carburant pour un moteur aérobie à hydrogène, notamment pour aéronef.

### Technique antérieure

De nos jours, les architectures de moteur d'aéronef sont parfaitement adaptées pour ingérer du kérosène qui est le carburant courant des aéronefs. Ces moteurs dans la famille desquels on retrouve les turboréacteurs et parfois les turbopropulseurs, sont appelés moteurs aérobies car ils utilisent l'oxygène de l'air pour réaliser les réactions chimiques nécessaires à la poussée. Ces moteurs aérobies ne peuvent être utilisés que dans l'atmosphère à l'inverse des moteurs dits anaérobies des lanceurs et véhicules spatiaux qui sont capables de produire une poussée en dehors de toute atmosphère. Ces derniers peuvent utiliser notamment de l'hydrogène liquide comme carburant combiné à de l'oxygène liquide utilisé comme comburant pour assurer les performances de poussée nécessaires à ce type d'application dans un environnement dépourvu d'oxygène.

Les moteurs d'aéronef à hydrogène existent mais ne permettent toutefois pas d'accueillir dans la chambre de combustion de ces moteurs de l'hydrogène liquide en raison de sa nature cryogénique, à savoir une température particulièrement basse de l'ordre de 20 à 30K.

Une des problématiques pour concevoir un système d'alimentation en hydrogène pour un moteur d'aéronef concerne la transformation d'hydrogène liquide à très basse température, de l'ordre de 20 à 30K, et à faible pression de l'ordre de 1 bar, en hydrogène à haute température (300K) et haute pression (plusieurs dizaines de bars). Ces conditions de haute température et de haute pression sont requises pour l'injection d'hydrogène dans la chambre de combustion du moteur d'aéronef afin de répondre aux exigences de performance, de bilan énergétique et de sécurité opérationnelle d'un tel système aéronautique.

Par ailleurs, pour un aéronef commercial, notamment de type court, moyen ou long-courrier, une problématique supplémentaire réside dans le fait que la mise en température de l'hydrogène aux conditions requises à l'entrée de la chambre de combustion du moteur d'aéronef soit indépendante des sources de chaleur issues du moteur d'aéronef, notamment celles engendrées par les gaz de combustion de la chambre ou de la tuyère. En effet, l'utilisation de ces sources de chaleur :
- peut conduire à une baisse des performances du système de propulsion de l'aéronef,
- n'offre généralement pas d'amplitude suffisante en débit et en pression de carburant pour gérer toutes les phases de vol dans le respect des exigences de performance et de consommation requises pour ce type d'aéronef,
- et peut engendrer un risque pour la sécurité de fonctionnement en raison d'un risque de combustion non maîtrisée de l'hydrogène à proximité d'air sous pression qui est présent dans la chambre de combustion du moteur d'aéronef. US 2021/310442 A1 décrit un module de moteur.

Au vu de ce qui précède il serait donc utile de concevoir un système d'alimentation en hydrogène pour un moteur d'aéronef qui réponde à au moins une des problématiques visées ci-dessus.

### Exposé de l'invention

Un mode de réalisation concerne un système de conditionnement de carburant pour un moteur aérobie à hydrogène, le système comprenant :
- au moins une pompe à hydrogène configurée pour augmenter la pression d'hydrogène liquide provenant d'un réservoir,
- un ou plusieurs échangeurs de chaleur configurés pour augmenter la température de l'hydrogène sous pression,
- un circuit d'alimentation en air, le système étant caractérisé en ce qu'il comprend également
- au moins un dispositif de combustion configuré pour assurer une combustion partielle de l'hydrogène avec de l'air provenant du circuit d'alimentation en air afin de produire un carburant comprenant un mélange de gaz incluant de l'hydrogène gazeux et qui est dépourvu d'oxygène.

Ce système de conditionnement est conçu de manière autonome par rapport à la chambre de combustion d'un moteur aérobie à hydrogène, c'est-à-dire qu'il n'a pas recours aux capacités disponibles dans la chambre de combustion du moteur et, en particulier, ce système ne fait pas intervenir les gaz chauds issus de la chambre de combustion du moteur pour monter en température l'hydrogène. Par ailleurs, ce système permet de transformer de manière efficace de l'hydrogène liquide à très basse température, de l'ordre de 20 à 30K, et à faible pression de l'ordre de 1 bar, en hydrogène à haute température et haute pression (ex : 550K et 40 bars) en entrée de la chambre de combustion du moteur aérobie. En outre, ce système ne nécessite pas de fluide caloporteur intermédiaire (ex : hélium) pour isoler ou étanchéifier l'hydrogène par rapport à l'air afin d'empêcher les risques d'incendie. Le système prévoit au contraire de réaliser une combustion partielle de l'hydrogène en consommant tout l'oxygène disponible au moment de la combustion si bien que le mélange gazeux produit par la combustion partielle ne comporte plus d'oxygène, écartant ainsi tout risque d'incendie, voire d'explosion et offrant donc une grande sûreté de fonctionnement.

Selon d'autres caractéristiques possibles :
- ladite au moins une pompe à hydrogène est disposée en amont du ou des échangeurs de chaleur dans le sens de circulation de l'hydrogène à partir de ladite au moins une pompe à hydrogène;
- le ou les échangeurs de chaleur sont configurés pour augmenter la température d'hydrogène au moins en partie par refroidissement d'un ou de plusieurs fluides;
- le système comprend un circuit d'hydrogène en aval de ladite au moins une pompe à hydrogène dans le sens de circulation de l'hydrogène à partir de ladite au moins une pompe à hydrogène et un circuit de carburant en aval dudit au moins un dispositif de combustion, le ou les échangeurs de chaleur étant connectés de manière fluidique entre les deux circuits afin d'augmenter la température de l'hydrogène dans le circuit d'hydrogène à partir de la chaleur du carburant produit par ledit au moins un dispositif de combustion dans le circuit de carburant ; ainsi, la chaleur issue de cette combustion contribue principalement à l'augmentation de température de l'hydrogène;

- le système comprend, en aval de ladite au moins une pompe à hydrogène dans le sens de circulation de l'hydrogène à partir de ladite au moins une pompe à hydrogène, une turbine configurée pour assurer une détente partielle de l'hydrogène sous pression afin de fournir à ladite au moins une pompe à hydrogène, sous forme mécanique via un arbre de transmission reliant la turbine à ladite au moins une pompe à hydrogène, au moins une partie de la puissance nécessaire au fonctionnement de ladite au moins une pompe à hydrogène ;
- le système comprend, en aval dudit au moins un dispositif de combustion dans le sens de circulation du carburant à partir dudit au moins un dispositif de combustion, une turbine configurée pour assurer une détente partielle du carburant produit par ledit au moins un dispositif de combustion afin de fournir à ladite au moins une pompe à hydrogène, sous forme mécanique via un arbre de transmission reliant la turbine à ladite au moins une pompe à hydrogène, au moins une partie de la puissance nécessaire au fonctionnement de ladite au moins une pompe à hydrogène;
- le système comporte un circuit de contournement de la turbine muni d'une vanne qui raccorde un point amont situé entre ledit au moins un dispositif de combustion et la turbine et un point aval situé en aval de la turbine, la vanne étant configurée pour contrôler le passage du flux du carburant produit par ledit au moins un dispositif de combustion dans la turbine et/ou le circuit de contournement de la turbine;
- ladite au moins une pompe à hydrogène et la turbine forment conjointement une turbopompe;
- le système comprend un séparateur de flux disposé en amont dudit au moins un dispositif de combustion dans le sens de circulation de l'hydrogène à partir de ladite au moins une pompe à hydrogène et qui est configuré pour séparer l'hydrogène en un premier flux fourni audit au moins un dispositif de combustion et un deuxième flux qui rejoint le carburant produit par ledit au moins un dispositif de combustion en aval de ce dernier;
- ladite au moins une pompe à hydrogène est une pompe à alimentation électrique et le système comprend au moins un moteur électrique configuré pour fournir à la pompe à alimentation électrique la totalité de la puissance nécessaire au fonctionnement de la pompe à alimentation électrique;
- le circuit d'alimentation en air est configuré pour transporter de l'air prélevé sur un moteur à hydrogène jusqu'audit au moins un dispositif de combustion et comprend un dispositif de surpression configuré pour assurer une montée en pression de cet air en vue de l'introduire dans ledit au moins un dispositif de combustion ;
- le système comprend un dispositif de compression configuré pour augmenter la pression du carburant produit par ledit au moins un dispositif de combustion ;
- le dispositif de compression est disposé dans le circuit de carburant en aval du ou des échangeurs de chaleur qui sont connectés de manière fluidique entre le circuit de carburant, en aval dudit au moins un dispositif de combustion, et le circuit d'hydrogène, en aval de ladite au moins une pompe à hydrogène.

Un autre mode de réalisation concerne un engin de locomotion aérien, maritime ou terrestre, caractérisé en ce qu'il comprend un moteur aérobie à hydrogène et un système de conditionnement tel que brièvement exposé ci-dessus pour le conditionnement de carburant d'un moteur aérobie à hydrogène.

Un autre mode de réalisation concerne un système d'alimentation en carburant d'une chambre de combustion d'un moteur aérobie à hydrogène, caractérisé en ce que le système d'alimentation en carburant comprend :
- au moins un système de conditionnement de carburant tel que brièvement exposé ci-dessus,
- au moins un réservoir d'hydrogène liquide configuré pour délivrer de l'hydrogène liquide à la dite au moins une pompe à hydrogène dudit au moins un système de conditionnement de carburant, et
- un dispositif d'injection configuré pour injecter le carburant produit par ledit au moins un dispositif de combustion dudit au moins un système de conditionnement de carburant dans une chambre de combustion d'un moteur aérobie à hydrogène.

Selon une caractéristique possible, le système comprend une pompe, par exemple immergée dans le réservoir, qui est configurée pour délivrer de l'hydrogène sous pression.

Un autre mode de réalisation concerne un procédé de conditionnement de carburant pour un moteur aérobie à hydrogène, le procédé comprenant :
- une montée en pression d'hydrogène liquide,
- une montée en température de l'hydrogène sous pression, le procédé étant caractérisé en ce qu'il comprend également
- une combustion partielle de l'hydrogène avec de l'air afin de produire un carburant comprenant un mélange de gaz incluant de l'hydrogène gazeux et qui est dépourvu d'oxygène.

Selon d'autres caractéristiques possibles:
- la montée en température d'hydrogène est obtenue au moins en partie en refroidissant un ou plusieurs fluides;
- la montée en température d'hydrogène est obtenue au moins en partie en refroidissant le carburant issu de la combustion partielle;
- le procédé comprend une détente partielle de l'hydrogène pour fournir sous forme mécanique au moins une partie de la puissance nécessaire à la montée en pression d'hydrogène liquide avant la combustion partielle de l'hydrogène;
- le procédé comprend une détente partielle du carburant produit par la combustion partielle de l'hydrogène pour fournir sous forme mécanique au moins une partie de la puissance nécessaire à la montée en pression d'hydrogène liquide avant la combustion partielle de l'hydrogène;
- au moins une partie de la puissance nécessaire à la montée en pression d'hydrogène liquide est fournie sous forme électrique ;
- le procédé comprend la séparation d'un flux d'hydrogène qui a été soumis à une montée en pression et en température en un premier flux soumis à la combustion partielle et un deuxième flux qui rejoint le carburant produit la combustion partielle avant son injection dans une chambre de combustion d'un moteur;
- l'hydrogène qui a été soumis à une montée en pression et en température est directement soumis à la combustion partielle ;
- le procédé comprend une augmentation de la pression du carburant produit par la combustion partielle de l'hydrogène avec de l'air ;
- l'augmentation de la pression du carburant produit par la combustion partielle de l'hydrogène avec de l'air est réalisée après le refroidissement du carburant issu de la combustion partielle.

### Brève description des dessins

L'objet du présent exposé et ses avantages seront mieux compris à la lecture de la description détaillée faite ci-après de différents modes de réalisation donnés à titre d'exemples non limitatifs. Cette description fait référence aux pages de figures annexées, sur lesquelles :
[Fig. 1] La figure 1 représente une première architecture possible d'un circuit d'un système de conditionnement de carburant SC1 intégré à un système 10 d'alimentation en carburant d'une chambre de combustion d'un moteur aérobie à hydrogène d'aéronef selon l'invention;
[Fig. 2] La figure 2 représente une deuxième architecture possible d'un circuit d'un système de conditionnement de carburant SC2 intégré à un système 110 d'alimentation en carburant d'une chambre de combustion d'un moteur aérobie à hydrogène d'aéronef selon l'invention;
[Fig. 3] La figure 3 représente une troisième architecture possible d'un circuit d'un système de conditionnement de carburant SC3 intégré à un système 1110 d'alimentation en carburant d'une chambre de combustion d'un moteur aérobie à hydrogène d'aéronef selon l'invention;
[Fig. 4] La figure 4 représente une quatrième architecture possible d'un circuit d'un système de conditionnement de carburant SC4 intégré à un système 210 d'alimentation en carburant d'une chambre de combustion d'un moteur aérobie à hydrogène d'aéronef selon l'invention;
[Fig. 5] La figure 5 représente un logigramme illustrant les principales étapes d'un procédé de conditionnement de carburant pour une chambre de combustion d'un moteur aérobie à hydrogène d'aéronef selon l'invention en relation avec chacune des différentes architectures des figures 1 à 4, et plus généralement, d'un procédé d'alimentation en carburant de cette chambre de combustion de moteur aérobie à hydrogène.

### Description des modes de réalisation

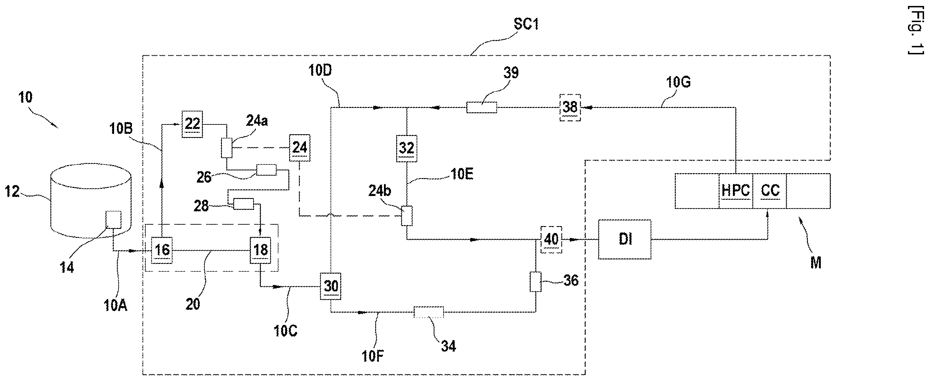

La figure 1 représente une première architecture possible d'un système de conditionnement de carburant SC1 pour un moteur aérobie à hydrogène d'aéronef M selon l'invention (moteur comportant au moins une entrée d'air) ou d'une turbine à gaz d'un moteur à hydrogène et, plus particulièrement, pour une chambre de combustion CC d'un tel moteur M.

Le système de conditionnement de carburant SC1 de la figure 1 utilise, en entrée, d'une part, de l'hydrogène liquide fourni par une ou plusieurs sources d'hydrogène liquide présentes à bord de l'aéronef, ici au moins un réservoir d'hydrogène liquide 12 (plusieurs réservoirs peuvent être présents, notamment pour des besoins de redondance ou de répartition des centres de masse dans l'aéronef) et, d'autre part, de l'air fourni par au moins une source d'air présente à bord de l'aéronef afin de produire du carburant qui sera fourni, en sortie du système SC1, à un dispositif d'injection du carburant DI dans la chambre de combustion CC du moteur M, comme cela sera décrit ultérieurement.

Comme représenté sur la figure 1, le système de conditionnement de carburant SC1 fait ici partie d'un système 10, plus général, d'alimentation en carburant qui comprend des éléments ou composants externes au système de conditionnement SC1, tels que ledit au moins un réservoir d'hydrogène liquide 12 et le dispositif d'injection du carburant DI décrits ci-après.

Ledit au moins un réservoir d'hydrogène liquide 12 (ici un seul réservoir est représenté et décrit mais cela n'exclut nullement la présence d'autres réservoirs et la description qui suit s'applique également à un système d'alimentation en carburant comprenant plusieurs réservoirs) contient de l'hydrogène liquide à une température basse et à une pression basse, par exemple respectivement de l'ordre de 20 à 25K et de l'ordre de 1 bar. On notera que le réservoir 12 est conçu, de manière connue, pour disposer d'une isolation thermique suffisante afin de maîtriser, voire d'annuler, le phénomène de vaporisation de l'hydrogène liquide contenu dans le réservoir (phénomène connu en terminologie anglo-saxonne sous le terme de « boil-off »). Le système décrit ci-dessous en référence à la figure 1 et notamment ses composants, ainsi que les autres architectures possibles de systèmes décrites ci-après en référence aux figures suivantes, n'exploitent pas ce phénomène.

Comme représenté sur la figure 1, une pompe de gavage 14 (« boost pump » selon la terminologie anglo-saxonne) peut être immergée dans le réservoir 12 et a pour fonction de mettre en pression l'hydrogène liquide présent dans le réservoir, par exemple à une pression de 4 bars, en vue de délivrer, en sortie du réservoir, de l'hydrogène liquide sous pression.

Le système de conditionnement de carburant SC1 comprend, en entrée, au moins une pompe à hydrogène liquide 16 qui est raccordée au réservoir par une portion de circuit 10A. Ladite au moins une pompe à hydrogène liquide 16 est disposée en aval du réservoir 12 (le sens aval étant indiqué par rapport au sens de circulation de l'hydrogène dans le circuit à partir du réservoir 12).

La pompe 16 qui est alimentée par l'hydrogène liquide sous pression délivré en sortie du réservoir 12 et circulant dans la portion de circuit 10A a pour fonction d'augmenter la pression de l'hydrogène liquide, de manière progressive jusqu'à une pression comprise dans une première gamme allant par exemple de 10 à 200 bars, plus particulièrement dans une deuxième gamme allant par exemple de 10 à 120 bars, voire dans une troisième gamme allant par exemple de 10 à 80 bars et par exemple d'environ 50 bars dans un exemple de réalisation. Les différences de pression sont fonction des besoins de la chambre de combustion du moteur aérobie à hydrogène d'aéronef. La pompe 16 est plus particulièrement raccordée à une turbine 18 par l'intermédiaire d'un arbre de transmission mécanique 20 et forme ainsi conjointement avec la turbine une turbopompe. Le système de conditionnement de carburant SC1 comporte au moins une turbopompe. On notera que la pompe de gavage 14 est immergée dans le réservoir 12 formant un bain cryogénique, ce qui permet de s'affranchir des problèmes de pression d'aspiration positive nette en entrée de la pompe à hydrogène liquide 16 (phénomène connu en terminologie anglo-saxonne sous le terme de « Net Positive Suction Pressure » et qui est relatif au problème de la cavitation), tout en respectant les exigences de température et de pression en entrée de cette pompe.

Le circuit du système de conditionnement de carburant SC1 comprend, en aval de la turbopompe à hydrogène 16 (dans le sens de circulation de l'hydrogène dans le circuit), une portion de circuit 10B comprenant une vanne de régulation 22 suivie d'un ou de plusieurs échangeurs de chaleur qui sont configurés pour augmenter la température de l'hydrogène sous pression délivrée par la turbopompe 16.

Dans l'exemple illustré sur la figure 1 la portion de circuit 10B peut comprendre plusieurs échangeurs de chaleur successifs, dont un premier échangeur de chaleur 24 qui utilise une source de chaleur disponible à bord de l'aéronef pour réaliser une première montée en température de l'hydrogène. Ce premier échangeur de chaleur 24 utilise ici une source de chaleur produite dans une autre portion (10E) du circuit du système de conditionnement qui sera décrite ultérieurement et où, plus particulièrement, des gaz chauds de combustion (carburant) sont générés. Dans l'architecture décrite ici le premier échangeur de chaleur 24 est configuré pour assurer la plus grande montée en température de l'hydrogène par rapport aux autres échangeurs de chaleur décrits ci-après (échangeurs auxiliaires) et est donc qualifié d'échangeur principal. Le système de conditionnement de carburant SC1 peut comprendre plusieurs échangeurs du type de l'échangeur 24.

Le premier échangeur de chaleur 24 peut être suivi d'un deuxième échangeur de chaleur 26 qui réalise une deuxième montée en température de l'hydrogène, ici par refroidissement d'un fluide calorifique d'un autre circuit présent à bord de l'aéronef, tel que par exemple un circuit d'huile de l'aéronef.

Un troisième échangeur de chaleur 28 pouvant être disposé en aval du deuxième échangeur 26 réalise une troisième montée en température de l'hydrogène, ici par refroidissement d'un autre fluide calorifique d'un autre circuit présent à bord de l'aéronef tel que par exemple un circuit d'air, et plus particulièrement d'un circuit d'air cabine provenant d'un système de contrôle de l'environnement dénommé ECS (selon la terminologie anglo-saxonne « Environmental Control System »).

En réchauffant l'hydrogène du circuit du système de conditionnement SC1 de la figure 1 d'autres circuits présents à bord de l'aéronef sont donc refroidis, ce qui permet de réduire les besoins en énergie et ainsi d'améliorer le bilan énergétique de l'aéronef en utilisant les enthalpies disponibles des circuits embarqués.

À titre d'exemple, l'hydrogène liquide dont la température est d'environ 25K au niveau de la vanne de régulation 22 augmente en température en sortie du premier échangeur 24 jusqu'à une température d'environ 240K, puis passe à une température d'environ 280K en sortie du deuxième échangeur 26 et enfin à une température d'environ 310K en sortie du troisième échangeur 28.

On notera que la température souhaitée de l'hydrogène en sortie du dernier échangeur est comprise par exemple entre 240K et 310K.

A titre d'exemple, la puissance thermique échangée dans l'échangeur principal peut être de l'ordre de 1,3 MW, tandis qu'elle avoisine plutôt 200 kW et 50kW respectivement dans les deux autres échangeurs. Ces deux derniers échangeurs ayant peu d'impact sur le circuit du système de conditionnement, ils sont ainsi plus faciles à concevoir et à contrôler que l'échangeur principal 24.

L'ordre dans lequel les échangeurs de chaleur du circuit sont configurés peut bien entendu varier notamment selon les gammes de température requises par chacun des fluides utilisés pour réchauffer l'hydrogène.

Tout échangeur de chaleur qui est configuré pour réchauffer un fluide depuis une température de l'ordre de 200K en entrée jusqu'à une température comprise entre 240K et 310K en sortie de cet échangeur peut convenir, en complément de l'augmentation de température assurée par le premier échangeur.

Le nombre et le type d'échangeurs, ainsi que les circuits de l'aéronef (notamment le ou les fluides calorifiques utilisés) dont la chaleur est extraite pour réchauffer hydrogène peuvent bien entendu varier par rapport à la description qui vient d'être faite.

La portion de circuit 10B est raccordée, en aval, à la turbine 18 de la turbopompe à hydrogène qui reçoit ainsi l'hydrogène sous pression, par exemple à une température de 310K et à une pression de 50 bars, issu de l'échangeur 28.

La détente partielle de l'hydrogène sous pression dans la turbine 18 procure à la turbopompe la puissance nécessaire pour la suite du cycle d'alimentation. En particulier, de la puissance mécanique est ainsi transmise à la pompe à hydrogène 16 via l'arbre de transmission mécanique 20 reliant la turbine 18 à la pompe 16 pour le fonctionnement de cette pompe.

La vanne de régulation 22 participe au réglage du débit d'hydrogène approprié injecté dans la turbine 18 et à l'atteinte des performances optimales de cette turbine. Selon une variante de réalisation non représentée, la vanne de régulation peut être agencée en parallèle de la turbine afin de former un dispositif de contournement ou by-pass de celle-ci. Cette configuration se justifie pour des raisons de facilité de conception de la vanne, de facilité de la régulation et d'instabilité au point bas de fonctionnement de la pompe.

L'hydrogène en sortie de turbine 18 est par exemple à une pression de l'ordre de 30 bars et à une température de l'ordre de 260K.

Le circuit du système de conditionnement de carburant SC1 comporte, en aval de la turbine 18, une portion de circuit 10C raccordant cette dernière à un séparateur de flux 30.

Le séparateur de flux 30 est raccordé, par une portion de circuit 10D, à au moins un dispositif de combustion, appelé aussi pré-chambre de combustion 32 (« pre-burner » selon la terminologie anglo-saxonne), qui produit des gaz de combustion riches en hydrogène et dépourvus d'oxygène, constitutifs plus particulièrement d'un carburant pour la chambre de combustion CC du moteur aérobie M de l'aéronef (ex : turbine à gaz). A titre d'exemple, la composition molaire des gaz en sortie de la pré-chambre de combustion 32 peut être la suivante : entre 5 et 10% de N2, entre 3 et 5% de H2O et entre 85 et 92% de H2. A titre d'exemple, la pré-chambre de combustion 32 peut être un générateur de gaz similaire à celui utilisé dans le lanceur Ariane 6 ou un générateur de gaz similaire à celui du moteur Vulcain. De manière générale, les composants utilisés dans ce système peuvent être similaires à des composants d'un moteur spatial tels que ceux utilisés dans le système de l'unité de puissance auxiliaire de l'étage supérieur du lanceur Ariane 6 moyennant un dimensionnement adapté, notamment pour remplacer l'oxygène liquide par de l'air et l'adapter aux caractéristiques thermomécaniques qui en découlent. A titre d'exemple, le premier échangeur de chaleur 24 peut être un échangeur du système de l'unité de puissance auxiliaire de l'étage supérieur du lanceur Ariane 6 et qui peut être redimensionné en fonction des besoins de puissance thermique. La pompe peut être similaire à une motopompe de l'unité de puissance auxiliaire de l'étage supérieur du lanceur Ariane 6 adaptée pour les besoins en débit et en pression requis par le présent circuit de conditionnement.

Le circuit du système de conditionnement de carburant SC1 comporte, en aval de la pré-chambre de combustion 32, la portion de circuit 10E déjà mentionnée ci-dessus en relation avec l'échangeur principal 24 et qui raccorde ce dernier au dispositif d'injection DI de la chambre de combustion CC du moteur aérobie.

Le séparateur de flux 30 est raccordé, par une portion de circuit 10F, à la portion de circuit 10E en aval de la pré-chambre de combustion 32, dans une zone de cette portion située en aval de la pré-chambre de combustion et en amont du dispositif d'injection DI de la chambre de combustion.

Le séparateur de flux est ainsi configuré pour séparer l'hydrogène délivré par la turbine 18, d'une part, en un premier flux fourni à la pré-chambre de combustion 32 par la portion de circuit 10D et, d'autre part, en un deuxième flux qui rejoint le carburant produit par la pré-chambre de combustion 32 en amont du dispositif d'injection DI de combustion.

Le rapport de débit entre les deux flux peut, par exemple, être de 50/50 ou, selon les besoins des équipements qui sont situés en aval du séparateur de flux dans les différentes portions de circuit concernées, le rapport peut adopter une autre répartition.

On notera que la portion de circuit 10F (optionnelle) comprend un ou plusieurs échangeurs de chaleur successifs dont un seul 34 est représenté. Dans le présent exemple, l'échangeur 34 peut être configuré pour augmenter la température du deuxième flux d'hydrogène avant son entrée dans la chambre de combustion du moteur. La nature du ou des échangeurs de chaleur utilisés dans cette portion ou branche de circuit est la même que celle des échangeurs 26 et 28 de la portion ou branche de circuit 10B décrite ci-dessus, à savoir qu'ils sont par exemple configurés pour refroidir un circuit d'huile et/ou un circuit d'air et/ou un circuit d'air cabine (ECS) de l'aéronef. Dans le présent exemple, l'échangeur 34 est un échangeur qui est configuré pour refroidir le circuit d'air cabine de l'aéronef. La portion de circuit 10F peut également comprendre, en aval de l'échangeur 34, un injecteur 36 situé en amont du point de raccordement avec la portion de circuit 10E, point qui est situé en amont du dispositif d'injection DI de la chambre de combustion CC du moteur.

À titre d'exemple, l'hydrogène en sortie de l'échangeur 34 peut être à une température de l'ordre de 280K et à une pression de 4 bars.

Le circuit du système de conditionnement de carburant SC1 comporte également un circuit d'alimentation en air qui prend ici la forme d'une portion de circuit 10G. De manière générale, la portion de circuit 10G fournit à la pré-chambre de combustion 32 de l'air (provenant d'une source d'air disponible à bord de l'aéronef et externe au système de conditionnement de carburant SC1) à une pression conforme aux exigences de pression requises en entrée de la pré-chambre de combustion 32 et qui sont, par exemple, de l'ordre de 50 bars. La portion de circuit 10G peut comporter, en outre, un dispositif de surpression ou surpresseur 38 qui est configuré pour assurer une montée en pression de l'air fourni par la source d'air au cas où cet air n'aurait pas la pression requise. La portion de circuit 10G peut également comporter un injecteur 39 permettant d'assurer une stabilité de combustion par un contrôle de la pression et du débit d'arrivée d'air. Dans l'exemple de réalisation illustré sur la figure 1 la portion de circuit 10G raccorde le compresseur haute pression HPC du moteur à hydrogène M de l'aéronef à la pré-chambre de combustion 32. Cette portion de circuit 10G forme un circuit d'alimentation en air pour transporter de l'air prélevé sur le moteur à hydrogène jusqu'à la pré-chambre de combustion 32. La portion de circuit 10G peut en outre comprendre un ou plusieurs échangeurs de chaleur pour refroidir, si nécessaire, l'air prélevé sur le moteur. Selon un autre mode de réalisation non représenté, la source d'air présente à bord de l'aéronef et qui est susceptible de fournir de l'air à la pré-chambre de combustion 32 peut être une bonbonne ou réservoir d'air sous pression.

Le premier flux d'hydrogène fourni à travers la portion de circuit 10D par le séparateur de flux 30 à partir du flux délivré par la turbine 18 est introduit dans la pré-chambre de combustion 32 où il est mélangé avec de l'air provenant du circuit d'alimentation d'air 10G. On notera que l'hydrogène présent dans le circuit en amont de la pré-chambre de combustion 32, et notamment à l'entrée de cette pré-chambre de combustion, n'est pas nécessairement sous forme gazeuse. L'hydrogène peut être dans un état subcritique, donc gazeux, si sa pression est inférieure à la pression critique (aux environs de 13bars pour l'hydrogène) et dans un état supercritique si sa pression est supérieure à la pression critique. L'hydrogène est partiellement brûlé dans la pré-chambre de combustion 32 (par exemple 4% en volume de l'hydrogène peuvent être brûlés) et la combustion partielle est contrôlée (par un dispositif de contrôle non représenté) afin de consommer la totalité de l'oxygène fourni par l'air d'alimentation. La combustion partielle produit ainsi un mélange de gaz incluant de l'hydrogène gazeux, de l'azote, de la vapeur d'eau et formant le carburant pour le moteur à hydrogène de l'aéronef, par exemple dans la composition molaire mentionnée ci-dessus. L'absence d'oxygène dans le mélange de gaz (carburant) qui va être fourni à la chambre de combustion du moteur apporte une grande sécurité au système d'alimentation ainsi configuré.

On notera que le besoin de réchauffer l'hydrogène avant son entrée dans la pré-chambre de combustion 32 (via le ou les échangeurs thermiques 24, 26, 28 amont) est nécessaire pour éviter des problèmes d'instabilité de combustion de l'hydrogène dans la pré-chambre et éviter des phénomènes de givrage susceptibles d'intervenir dans la pré-chambre avec de l'hydrogène à basse température.

La pré-chambre de combustion 32 est notamment présente afin d'augmenter la température de l'hydrogène. À titre d'exemple, le mélange gazeux produit par la pré-chambre de combustion 32 atteint une température de l'ordre de 750K et une pression d'environ 40 bars.

La portion de circuit 10E située en aval de la pré-chambre de combustion 32 est raccordée à l'échangeur de chaleur 24 décrit plus haut et permet ainsi de réchauffer l'hydrogène circulant dans la portion de circuit 10B décrite ci-dessus en amont de la turbine 18. On a représenté sur la figure 1 les deux parties de l'échangeur 24a et 24b dans chacune desquelles circule l'un des deux fluides que sont respectivement l'hydrogène à réchauffer et le mélange de gaz de combustion chauds (carburant) à refroidir. Cette configuration permet de mutualiser les besoins d'enthalpie des deux portions de circuit 10E et 10B. On notera en effet que la température de l'hydrogène en amont de la turbine 18 doit être augmentée et que la température des gaz de combustion issus de la pré-chambre de combustion 32 est trop élevée pour pouvoir être utilisée directement dans la chambre de combustion du moteur.

À titre d'exemple la température du mélange gazeux produit par la pré-chambre de combustion 32 et refroidi dans l'échangeur 24 est comprise entre 400K et 600K et est, par exemple, d'environ 550K.

Le deuxième flux transporté par la portion de circuit 10F rejoint la portion de circuit 10E en aval de l'échangeur 24 afin de se mélanger avec le mélange gazeux (carburant) refroidi.

Le mélange gazeux (carburant) transporté par la portion de circuit 10E et enrichi par l'apport du deuxième flux est ainsi acheminé jusqu'au dispositif d'injection DI de la chambre de combustion CC du moteur aérobie pour être injecté dans cette dernière de manière connue. Ce mélange gazeux est par exemple à une température d'environ 550K et à une pression d'environ 40 bars.

Il convient cependant de noter que le séparateur de flux 30 et la portion de circuit associée 10F peuvent être omis dans une variante de réalisation et, ainsi, le système de conditionnement ne comprend qu'une seule portion de circuit en sortie de la turbine 18 pour l'alimentation en hydrogène de la partie aval du système qui comprend notamment la pré-chambre de combustion 32. Dans une telle variante, la chambre de combustion CC n'est ainsi alimentée qu'à partir d'une seule portion de circuit et d'un seul mélange de gaz issu directement de la pré-chambre de combustion 32.

La configuration du système de conditionnement de carburant SC1 qui vient d'être décrite (incluant la variante précitée), et notamment du système d'alimentation en carburant 10 qui intègre le système SC1, permet d'améliorer les performances énergétiques du moteur d'aéronef par rapport à une configuration à cycle ouvert, tout en minimisant les pertes de fluide dans le système. Ici, l'intégralité du débit d'hydrogène est réinjectée dans le moteur, contrairement à un cycle ouvert pour lequel une partie du carburant est utilisée pour d'autres fonctions et est relâchée dans l'atmosphère sans contribuer au fonctionnement du moteur.

Bien que cela ne soit pas représenté sur la figure 1, plusieurs composants ou sous-systèmes de même type peuvent être présents dans le système concerné tels que, par exemple, le réservoir 12 du système d'alimentation en carburant 10 et, dans le système de conditionnement de carburant SC1 : la turbopompe (16, 18), l'échangeur principal 24 et la pré-chambre de combustion 32. Par exemple, l'échangeur principal 24 et la pré-chambre de combustion 32 peuvent être réalisés sous la forme d'un seul composant ou bloc.

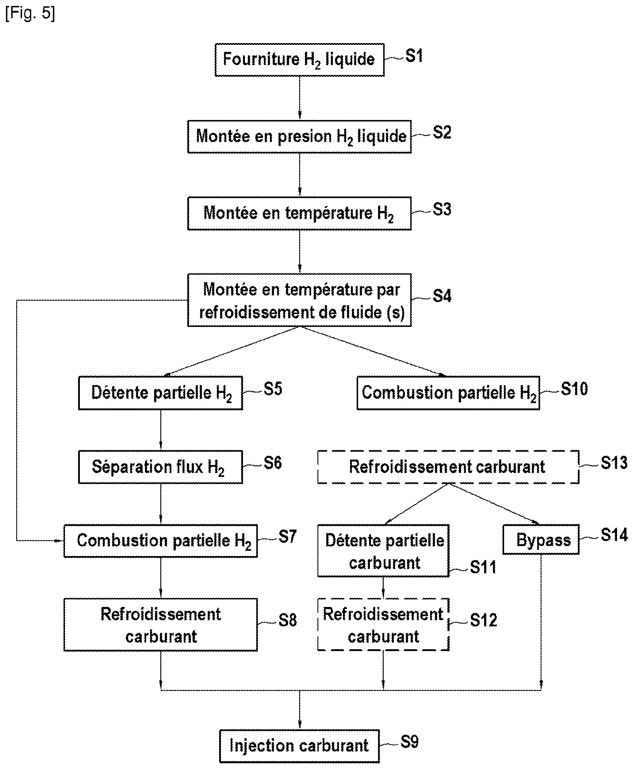

Le fonctionnement du système de conditionnement de carburant précité SC1 de la figure 1 et le fonctionnement du système d'alimentation en carburant 10 dont il fait partie dans ce mode de réalisation, est illustré sur la figure 5 sous la forme d'un logigramme décrivant les principales étapes du procédé de conditionnement de carburant pour le moteur M et, plus généralement, du procédé d'alimentation en carburant de ce moteur.

Plus particulièrement, le procédé de la figure 5 comprend les étapes respectives S1 à S4 de fourniture d'hydrogène liquide, de montée en pression d'hydrogène liquide et de montée en température d'hydrogène, notamment par refroidissement d'un fluide (en l'occurrence le carburant provenant de la pré-chambre de combustion 32). Ce procédé comprend ensuite une étape S5 de détente partielle de l'hydrogène dont la pression et la température ont été augmentées au cours des étapes précédentes, puis une étape S6 (optionnelle) de séparation du flux issu de la détente partielle de l'étape précédente et une étape S7 de combustion partielle de l'hydrogène avec de l'air afin de produire un carburant comprenant un mélange de gaz incluant de l'hydrogène gazeux et qui est dépourvu d'oxygène. Au cours de l'étape suivante S8, le carburant ainsi produit est refroidi par échange thermique avec l'hydrogène monté en pression, comme indiqué ci-dessus, et qui, quant à lui, est réchauffé. Le carburant refroidi est ensuite injecté dans la chambre de combustion CC du moteur aérobie à hydrogène M au cours d'une étape S9. Les étapes S2-S8 sont réalisées par le procédé de conditionnement de carburant pour un moteur aérobie à hydrogène et les étapes S1 et S9 ne sont réalisées que par le procédé d'alimentation en carburant du moteur aérobie à hydrogène.

Le circuit du système de conditionnement de carburant de la figure 1 peut également comporter, selon une variante de réalisation, un dispositif de compression 40, également appelé compresseur, qui est configuré pour augmenter la pression du carburant produit par la pré-chambre de combustion 32. Dans cette variante, le surpresseur d'air 38 de la portion de circuit 10G est omis. Le compresseur 40 est disposé dans la portion 10E de circuit de carburant située en aval du ou des échangeurs de chaleur 24 (partie 24b de l'échangeur sur le circuit carburant). Ce ou ces échangeurs de chaleur sont connectés de manière fluidique entre le circuit de carburant, en aval de la pré-chambre de combustion 32, et le circuit d'hydrogène, en aval de la pompe à hydrogène 16. Dans l'exemple représenté sur la figure 1, le compresseur 40 est positionné, dans le circuit SC1, juste en amont du dispositif d'injection DI et, plus particulièrement, en aval du point de raccordement entre la portion 10E et la portion optionnelle 10F. Le compresseur 40 est ainsi disposé, ici, en sortie du circuit de conditionnement SC1. Toutefois, le compresseur 40 peut, alternativement, être disposé en amont de ce point de raccordement. Bien entendu, dans la variante de réalisation décrite ici, la portion de circuit 10F peut également être omise. On notera que le compresseur 40 peut être un compresseur centrifuge entrainé par une turbine à air ou bien un compresseur entrainé par un moteur électrique.

En utilisant un compresseur 40 en aval de la pré-chambre de combustion 32 et en supprimant le surpresseur d'air 38 sur le circuit d'air on diminue la pression en entrée de la pré-chambre de combustion 32 et, donc on diminue les besoins de pression sur le circuit d'hydrogène et donc les contraintes qui y sont associées. Par ailleurs, cette variante permet de simplifier la conception de la partie 10G du circuit d'alimentation d'air (notamment du surpresseur 38) dans laquelle la température du flux d'air et son débit massique sont contraignants dans le mode de réalisation où l'air est prélevé à partir de la chambre de combustion du moteur. Le compresseur 40 permet de compenser les pertes de pression qui se produisent en amont du circuit et, ainsi, de fournir au dispositif d'injection DI un carburant à une pression augmentée, par exemple de l'ordre de 50bars. A titre d'exemple, la pression en entrée de la pré-chambre de combustion 32 peut être de l'ordre de 50bars, la pression de l'hydrogène en sortie de la pompe 16 peut être de l'ordre de 100bars et de 50bars en aval de la turbine 18.

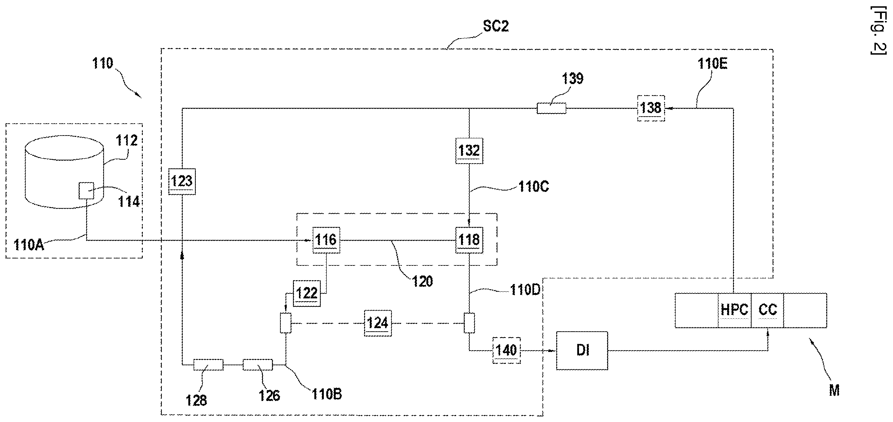

La figure 2 représente une deuxième architecture possible d'un circuit d'un système de conditionnement de carburant SC2 pour une chambre de combustion CC d'un moteur aérobie à hydrogène M d'aéronef selon l'invention.

Le système de conditionnement de carburant SC2 de la figure 2 utilise, en entrée, d'une part, de l'hydrogène liquide fourni par une ou plusieurs sources d'hydrogène liquide présentes à bord de l'aéronef, ici au moins un réservoir d'hydrogène liquide 112 (plusieurs réservoirs peuvent être présents) et, d'autre part, de l'air fourni par au moins une source d'air présente à bord de l'aéronef afin de produire du carburant qui sera fourni, en sortie du système SC2, à un dispositif d'injection du carburant DI dans la chambre de combustion CC du moteur M, comme cela sera décrit ultérieurement.

Comme représenté sur la figure 2, le système de conditionnement de carburant SC2 fait ici partie d'un système 110, plus général, d'alimentation en carburant qui comprend des éléments ou composants externes au système de conditionnement SC2, tels que ledit au moins un réservoir d'hydrogène liquide 112 et le dispositif d'injection du carburant DI décrits ci-après.

Comme pour la première architecture de la figure 1, le réservoir d'hydrogène liquide 112 dans laquelle une pompe de gavage 114 peut être immergée est configurée pour fournir, en sortie du réservoir (et en aval de celui-ci dans le sens de circulation de l'hydrogène dans le circuit à partir du réservoir) de l'hydrogène liquide sous pression, par l'intermédiaire d'une portion de circuit 110A, à une pompe à hydrogène 116 du système de conditionnement de carburant SC2 (entrée du système SC2). La pompe 116 est raccordée, par l'intermédiaire d'un arbre de transmission mécanique 120, à une turbine 118 et forme conjointement avec cette dernière une turbopompe. Le système de conditionnement de carburant SC2 comprend également, en aval de la pompe 116 ayant servi à monter en pression l'hydrogène liquide, une portion de circuit 110B qui comporte une vanne de régulation 122 et, en aval de celle-ci, un ou plusieurs échangeurs de chaleur pour assurer une montée en température de l'hydrogène sous pression. Dans cette architecture le système 110 peut comporter les échangeurs de chaleur 124, 126 et 128 correspondant respectivement aux échangeurs de chaleur 24, 26 et 28 de la figure 1 (ou au moins l'échangeur principal 124).

La portion de circuit 110 B peut comporter également, en aval du ou des échangeurs de chaleur, une autre vanne de régulation 123 qui, comme la vanne de régulation 122, permet également d'ajuster le débit en hydrogène dans le circuit.

À la différence de l'architecture de la figure 1, dans l'architecture de la figure 2 :
- la portion de circuit 10B qui comporte le ou les échangeurs de chaleur n'est pas raccordée à la turbine 118 de la turbopompe mais à la pré-chambre de combustion 132 et l'hydrogène réchauffé par ce ou ces échangeurs thermiques est ainsi directement admis dans la pré-chambre de combustion 132 pour y être brûlé partiellement grâce à de l'air provenant du circuit d'alimentation d'air 110E identique au circuit 10G de la figure 1;
- le mélange de gaz de combustion (carburant) généré par la pré-chambre de combustion 132 (comme pour l'architecture de la figure 1, ce mélange comprend de l'hydrogène gazeux partiellement brûlé, de l'azote, de la vapeur d'eau et est exempt d'oxygène ; il peut comprendre la même composition molaire que celle indiquée plus haut) est transporté par une portion de circuit 110C qui raccorde directement la sortie de la pré-chambre de combustion 132 à l'entrée de la turbine 118 de la turbopompe et est ainsi injecté directement dans cette turbine où il subit une détente partielle.

Le système de conditionnement de carburant SC2 comporte, en aval de la turbine 118, une portion de circuit 110D qui raccorde la sortie de la turbine 118 au dispositif d'injection DI de la chambre de combustion du moteur (le dispositif d'injection DI fait, quant à lui, partie du système d'alimentation en carburant 110).

Comme pour l'architecture de la figure 1, la portion de circuit 110D traverse l'échangeur thermique 124 (même configuration que pour la portion de circuit 10E avec l'échangeur thermique 24 de la figure 1) dans lequel le mélange de gaz de combustion (carburant) issu de la pré-chambre de combustion 132 est refroidi, alors que l'hydrogène circulant dans la portion de circuit 110B est réchauffé.

On notera que la turbine 118 est une turbine de gaz chaud qui présente des caractéristiques de fonctionnement et de performance supérieures à celles de la turbine 18 de l'architecture de la figure 1. La puissance délivrée par la turbine 118 qui fonctionne avec des gaz chauds permet également, comme pour l'architecture de la figure 1, de réduire les contraintes de fonctionnement de la pompe à hydrogène 116 (par exemple, une pompe centrifuge) via l'arbre de transmission 120 reliant la turbine à la pompe 116.

Dans la mesure où les spécifications des composants utilisés dans le circuit de la figure 2 sont moins exigeantes que celles des composants du circuit la figure 1 (turbopompe à hydrogène 16 et turbine 18) qui doivent fonctionner à basse température, les performances du système de la figure 2 et le coût de production de ce système sont améliorés par rapport au système de la figure 1.

Tout ce qui a été décrit en relation avec l'architecture de la figure 1 reste applicable à l'architecture de la figure 2 à l'exception toutefois des différences présentées ci-dessus.

Le circuit de la figure 2 comprend, en aval de la turbine 118, un seul circuit raccordé au dispositif d'injection DI de la chambre combustion CC du moteur aérobie pour alimenter cette dernière avec le carburant. Cet agencement simplifie l'architecture du système par rapport à une architecture où le flux issu de la turbine est séparé en deux flux par un séparateur de flux, avec une deuxième portion de circuit (analogue à la portion 10F de la figure 1) qui réinjecte une partie du flux en aval des gaz de combustion issus de la pré-chambre de combustion, après leur passage dans l'échangeur de chaleur principal, notamment pour leur refroidissement.

Toutefois, selon une variante de réalisation non représentée, l'architecture de la figure 2 peut comprendre une configuration avec un séparateur de flux comme sur la figure 1.

À titre d'exemple, les températures de l'hydrogène dans la portion de circuit 110B sont respectivement de 180K, 210K et 250K en sortie des échangeurs 124, 126 et 128. En sortie de la pré-chambre de combustion 132, le mélange de gaz de combustion (carburant) est par exemple à une température de l'ordre de 630K et une pression de 60 bars, qui est une pression plus élevée qu'à la sortie de la pré-chambre de combustion 32 de la figure 1. À la sortie de la turbine 118, le mélange de gaz de combustion qui a été détendu partiellement, par exemple jusqu'à une pression de l'ordre de 50 bars, est refroidi dans l'échangeur 124 par exemple jusqu'à une température de l'ordre de 470K.

Bien que cela ne soit pas représenté sur la figure 2, plusieurs composants ou sous systèmes de même type peuvent être présents dans le système concerné tels que, par exemple, le réservoir 112 du système d'alimentation en carburant 110 et, dans le système de conditionnement de carburant SC2 : la turbopompe (116, 118), l'échangeur principal 124 et la pré-chambre de combustion 132.

Le fonctionnement du système de conditionnement de carburant précité SC2 de la figure 2 et le fonctionnement du système d'alimentation en carburant 110 dont il fait partie dans ce mode de réalisation, est illustré sur la figure 5 sous la forme d'un logigramme décrivant les principales étapes du procédé de conditionnement de carburant pour le moteur M et, plus généralement, du procédé d'alimentation en carburant de ce moteur.

Plus particulièrement, le procédé de la figure 5 comprend les étapes respectives S1 à S4 de fourniture d'hydrogène liquide, de montée en pression d'hydrogène liquide et de montée en température d'hydrogène, notamment par refroidissement d'un fluide (en l'occurrence le carburant provenant de la pré-chambre de combustion 132). Ce procédé comprend ensuite une étape S10 de combustion partielle de l'hydrogène avec de l'air afin de produire un carburant comprenant un mélange de gaz incluant de l'hydrogène gazeux et qui est dépourvu d'oxygène, puis une étape S11 de détente partielle du carburant ainsi produit. Au cours de l'étape suivante S12, le carburant ainsi produit est refroidi par échange thermique avec l'hydrogène monté en pression, comme indiqué ci-dessus, et qui, quant à lui, est réchauffé. Le carburant refroidi est ensuite injecté dans la chambre de combustion CC du moteur aérobie à hydrogène M au cours d'une étape S9. Les étapes S2-S4, S10-S12 sont réalisées par le procédé de conditionnement de carburant pour un moteur aérobie à hydrogène. Les étapes S1 et S9 ne sont réalisées que par le procédé d'alimentation en carburant du moteur aérobie à hydrogène.

Le circuit du système de conditionnement de carburant de la figure 2 peut également comporter, selon une variante de réalisation, un compresseur 140 qui est configuré pour augmenter la pression du carburant produit par la pré-chambre de combustion 132. Dans cette variante, le surpresseur d'air 138 de la portion de circuit 110E est omis. Le compresseur 140 est disposé dans la portion 110D de circuit de carburant située en aval du ou des échangeurs de chaleur 124. Ce ou ces échangeurs de chaleur sont connectés de manière fluidique entre le circuit de carburant, en aval de la pré-chambre de combustion 132, et le circuit d'hydrogène, en aval de la pompe à hydrogène 116. Dans l'exemple représenté sur la figure 2, le compresseur 140 est positionné, dans le circuit SC2, entre le ou les échangeurs de chaleur 124 et le dispositif d'injection DI, c'est-à-dire en sortie du circuit de conditionnement SC2.

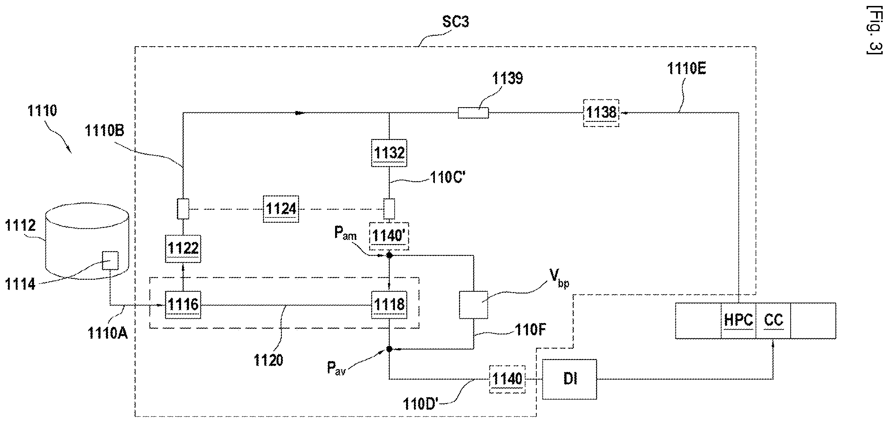

La figure 3 représente une troisième architecture possible d'un circuit d'un système de conditionnement de carburant SC3 pour une chambre de combustion CC d'un moteur aérobie à hydrogène M d'aéronef selon l'invention.

L'architecture de la figure 3 est très similaire à celle de la figure 2 et les éléments correspondants de la figure 2 qui sont repris dans la figure 3 sont précédés du chiffre « 1 » dans cette dernière.

Comme représenté sur la figure 3, le système de conditionnement de carburant SC3 fait ici partie d'un système 1110, plus général, d'alimentation en carburant qui comprend des éléments ou composants externes au système de conditionnement SC3, tels que ledit au moins un réservoir d'hydrogène liquide 1112 et le dispositif d'injection du carburant DI.

L'architecture du système de la figure 3 diffère de celle de la figure 2, principalement par le fait que :
- l'échangeur de chaleur 1124 qui assure au moins en partie le réchauffage de l'hydrogène circulant dans la portion de circuit 1110B est placé directement en sortie de la pré-chambre de combustion 1132 sur la portion de circuit 110C' raccordant la pré-chambre de combustion à la turbine 1118 et non en aval de la turbine (comme sur la figure 2 où l'échangeur est placé en aval de la turbine 118).
- une portion de circuit de contournement (by-pass) 110F de la turbine 1118 est aménagée entre un point amont Pam situé sur la portion de circuit 110C', en amont de la turbine et en aval de l'échangeur 1124, et un point aval Pav situé sur la portion de circuit 110D' qui raccorde la turbine au dispositif d'injection DI. Cette portion de circuit 110F est équipée d'une vanne de régulation Vbp de type bypass qui est configurée pour contrôler le passage du flux du mélange de gaz de combustion (carburant) dans la turbine 1118 et/ou dans la portion de circuit 110F. Lorsque la vanne de régulation est complètement ouverte, le flux circulant dans la portion de circuit 110C' s'écoule totalement dans la portion de circuit de contournement 110F, stoppant ainsi le fonctionnement de la turbine. La vanne de régulation Vbp est ainsi asservie au régime de poussée de l'aéronef.

On notera qu'à la différence de l'architecture de la figure 2, la portion de circuit 1110B comporte un seul échangeur thermique 1124 correspondant à l'échangeur 124 de la figure 2 et non plusieurs échangeurs thermiques. Toutefois, selon une variante non représentée, des échangeurs analogues aux autres échangeurs 126 et 128 de la figure 2 peuvent être ajoutés.

Dans une variante de réalisation non représentée, l'échangeur de chaleur 1124 peut être placé après le point aval Pav de la portion de circuit de contournement 110F sur la portion de circuit 110D', c'est-à-dire en aval de la turbine comme dans l'architecture de la figure 2.

Bien que cela ne soit pas représenté sur la figure 3, plusieurs composants ou sous systèmes de même type peuvent être présents dans le système concerné tels que, par exemple, le réservoir 1112 du système d'alimentation en carburant 1110 et, dans le système de conditionnement de carburant SC3 : la turbopompe (1116, 1118), l'échangeur principal 1124 et la pré-chambre de combustion 1132.

Le fonctionnement du système de conditionnement de carburant précité SC3 de la figure 3 et le fonctionnement du système d'alimentation en carburant 1110 dont il fait partie dans ce mode de réalisation, est illustré sur la figure 5 sous la forme d'un logigramme décrivant les principales étapes du procédé de conditionnement de carburant pour le moteur M et, plus généralement, du procédé d'alimentation en carburant de ce moteur.

Plus particulièrement, le procédé de la figure 5 comprend les étapes respectives S1 à S4 de fourniture d'hydrogène liquide, de montée en pression d'hydrogène liquide et de montée en température d'hydrogène, notamment par refroidissement d'un fluide (en l'occurrence le carburant provenant de la pré-chambre de combustion 1132). Ce procédé comprend ensuite une étape S10 de combustion partielle de l'hydrogène avec de l'air afin de produire un carburant comprenant un mélange de gaz incluant de l'hydrogène gazeux et qui est dépourvu d'oxygène. Au cours de l'étape suivante S13, le carburant ainsi produit est refroidi par échange thermique avec l'hydrogène monté en pression, comme indiqué ci-dessus, et qui, quant à lui, est réchauffé. Le procédé comporte ensuite, soit une étape S11 de détente partielle du carburant ainsi produit et refroidi, soit une étape de contournement ou by-pass S14 évitant l'étape de détente partielle. Le carburant refroidi, partiellement détendu ou non, est ensuite injecté dans la chambre de combustion CC du moteur aérobie à hydrogène M au cours d'une étape S9. Les étapes S2-S4, S10, S13, S11, S14 sont réalisées par le procédé de conditionnement de carburant pour un moteur aérobie à hydrogène. Les étapes S1 et S9 ne sont réalisées que par le procédé d'alimentation en carburant du moteur aérobie à hydrogène.

Le circuit du système de conditionnement de carburant de la figure 3 peut également comporter, selon une variante de réalisation, un compresseur 1140 qui est configuré pour augmenter la pression du carburant produit par la pré-chambre de combustion 1132. Dans cette variante, le surpresseur d'air 1138 de la portion de circuit 1110E est omis. Le compresseur 1140 peut être disposé dans la portion 110D' de circuit de carburant située en aval du ou des échangeurs de chaleur 1124. Ce ou ces échangeurs de chaleur sont connectés de manière fluidique entre le circuit de carburant, en aval de la pré-chambre de combustion 1132, et le circuit d'hydrogène, en aval de la pompe à hydrogène 1116. Dans l'exemple représenté sur la figure 3, le compresseur 1140 est positionné, dans le circuit SC3, entre le ou les échangeurs de chaleur 1124 et le dispositif d'injection DI, c'est-à-dire en sortie du circuit de conditionnement SC3. Plus particulièrement, le compresseur 1140 est disposé en aval de la turbine 1118 et du point Pav de la portion de contournement 110F.

Selon une autre variante de réalisation illustrée sur la figure 3, le compresseur 1140' est positionné en aval du ou des échangeurs 1124, dans la portion 110C' et en amont du point Pam de la portion de contournement 110F et, donc, en amont de la turbine 1138. Les mêmes caractéristiques et avantages que ceux de la variante précédente du compresseur 1140 s'appliquent également ici et ne seront pas répétés.

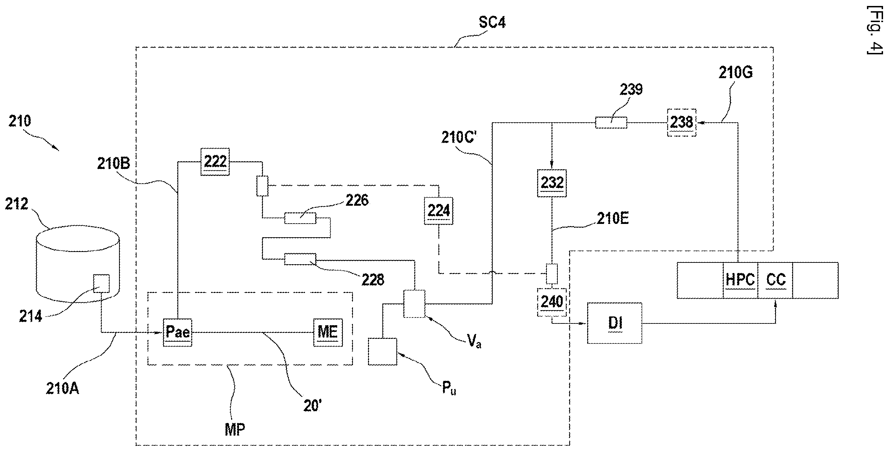

La figure 4 représente une quatrième architecture possible d'un circuit d'un système de conditionnement de carburant SC4 pour une chambre de combustion CC d'un moteur aérobie à hydrogène M d'aéronef selon l'invention.

L'architecture de la figure 4 est similaire en termes de cycle et de circuit d'alimentation à celle de la figure 1 et les éléments correspondants de la figure 1 qui sont repris dans la figure 4 sont précédés du chiffre « 2 » dans cette dernière.

Comme représenté sur la figure 4, le système de conditionnement de carburant SC4 fait ici partie d'un système 210, plus général, d'alimentation en carburant qui comprend des éléments ou composants externes au système de conditionnement SC4, tels que ledit au moins un réservoir d'hydrogène liquide 212 et le dispositif d'injection du carburant DI.

À la différence de l'architecture de la figure 1, le système de conditionnement de carburant SC4 de la figure 4 comprend une motopompe MP qui comporte une pompe Pae à alimentation électrique, par exemple centrifuge, remplaçant la pompe 16 de la figure 1 et un moteur électrique ME remplaçant la turbine 18 de la figure 1. Le moteur électrique est configuré pour fournir à la pompe Pae la puissance nécessaire au fonctionnement de celle-ci et est notamment relié à celle-ci par l'intermédiaire d'un arbre de transmission mécanique 20'. Cet agencement permet de s'affranchir des exigences de conception de la turbine 18 de la figure 1.

Comme pour l'architecture de la figure 1, le système de conditionnement de carburant SC4 de la figure 4 est également configuré pour assurer une montée en température de l'hydrogène en sortie de la pompe Pae par l'intermédiaire d'un ou de plusieurs échangeurs thermiques 224, 226 et 228, pour produire un mélange de gaz de combustion (carburant) en utilisant un générateur de gaz 232 et pour réaliser un échange thermique entre ces gaz chauds (afin de les refroidir) et l'hydrogène (pour permettre d'augmenter la température de l'hydrogène) par l'intermédiaire du ou des échangeurs thermiques 224-228.

Contrairement à l'architecture de la figure 1, l'hydrogène réchauffé dans la portion de circuit 210B est directement injecté dans la pré-chambre de combustion 232, par l'intermédiaire d'une portion de circuit 210C', au lieu d'être fourni à une turbine comme dans l'architecture la figure 1.

Un système de purge Pu du circuit est par exemple prévu immédiatement en aval de l'échangeur 228 grâce à une vanne d'arrêt Va.

L'utilisation d'un moteur électrique ME couplé mécaniquement à une pompe à hydrogène (motopompe), ici une pompe centrifuge, permet de diminuer la pression en sortie de la pompe et donc de diminuer les contraintes mécaniques auxquelles est soumis le circuit d'hydrogène dans son ensemble. Cet agencement permet également de faciliter la mise en œuvre de la pompe.

Bien que cela ne soit pas représenté sur la figure 4, plusieurs composants ou sous systèmes de même type peuvent être présents dans le système concerné tels que, par exemple, le réservoir 212 du système d'alimentation en carburant 210 et, dans le système de conditionnement de carburant SC4 : la pompe Pae et le moteur ME, l'échangeur principal 224 et la pré-chambre de combustion 232.

Le fonctionnement du système de conditionnement de carburant précité SC4 de la figure 4 et le fonctionnement du système d'alimentation en carburant 210 dont il fait partie dans ce mode de réalisation, est illustré sur la figure 5 sous la forme d'un logigramme décrivant les principales étapes du procédé de conditionnement de carburant pour le moteur M et, plus généralement, du procédé d'alimentation en carburant de ce moteur.

Plus particulièrement, le procédé de la figure 5 comprend les étapes respectives S1 à S4 de fourniture d'hydrogène liquide, de montée en pression d'hydrogène liquide et de montée en température d'hydrogène, notamment par refroidissement d'un fluide (en l'occurrence le carburant provenant de la pré-chambre de combustion 232). Ce procédé comprend ensuite une étape S7 de combustion partielle de l'hydrogène avec de l'air afin de produire un carburant comprenant un mélange de gaz incluant de l'hydrogène gazeux et qui est dépourvu d'oxygène. Au cours de l'étape suivante S8, le carburant ainsi produit est refroidi par échange thermique avec l'hydrogène monté en pression, comme indiqué ci-dessus, et qui, quant à lui, est réchauffé. Le carburant ainsi refroidi est ensuite injecté dans la chambre de combustion CC du moteur aérobie à hydrogène M au cours d'une étape S9. Les étapes S2-S4, S7, S8 sont réalisées par le procédé de conditionnement de carburant pour un moteur aérobie à hydrogène. Les étapes S1 et S9 ne sont réalisées que par le procédé d'alimentation en carburant du moteur aérobie à hydrogène.

Le circuit du système de conditionnement de carburant de la figure 4 peut également comporter, selon une variante de réalisation, un compresseur 240 qui est configuré pour augmenter la pression du carburant produit par la pré-chambre de combustion 232. Dans cette variante, le surpresseur d'air 238 de la portion de circuit 210G est omis. Le compresseur 240 est disposé dans la portion 210E de circuit de carburant située en aval du ou des échangeurs de chaleur 224. Ce ou ces échangeurs de chaleur sont connectés de manière fluidique entre le circuit de carburant, en aval de la pré-chambre de combustion 232, et le circuit d'hydrogène, en aval de la pompe à hydrogène Pae. Dans l'exemple représenté sur la figure 4, le compresseur 240 est positionné, dans le circuit SC3, entre le ou les échangeurs de chaleur 224 et le dispositif d'injection DI, c'est-à-dire en sortie du circuit de conditionnement SC3.

Les différentes architectures décrites ci-dessus ont notamment pour point commun de restreindre/confiner la partie cryogénique du circuit au plus près du réservoir d'hydrogène, ce qui permet d'éviter que le moteur ne soit en contact immédiat avec un environnement cryogénique.

Les risques de fuite d'hydrogène dans les échangeurs, notamment dans l'échangeur principal 24 de la figure 1 sont réduits dans la mesure où l'hydrogène pourrait, en cas de fuite, au pire se retrouver en présence du mélange gazeux (carburant) riche en hydrogène et qui est exempt d'oxygène, écartant ainsi les risques d'incendie ou d'explosion. La simplification de l'architecture et donc de sa réalisation est un avantage qui provient de la limitation du risque précité.

Les systèmes de conditionnement décrits ci-dessus (SC1 à SC4) n'utilisent pas les capacités de la chambre de combustion du moteur aérobie pour monter en température et en pression l'hydrogène et, notamment, ne prélèvent pas de gaz chauds de celle-ci dans ce but, évitant ainsi une baisse des performances du système de propulsion du moteur d'aéronef.

Les systèmes de conditionnement décrits ci-dessus (SC1 à SC4) sont conçus de manière autonome (c'est-à-dire sans interaction) par rapport à la chambre de combustion et aux sous-systèmes moteur, à savoir les turbines HP (haute pression) et BP (basse pression) du moteur.

L'invention décrite ci-dessus peut également s'appliquer à d'autres moteurs tels que des moteurs de train, de bateau ou d'un engin de locomotion terrestre ou à des installations fixes utilisant des turbines à gaz.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également manifeste que toutes les caractéristiques décrites en référence à un système sont transposables, seules ou en combinaison, à un procédé, et inversement, toutes les caractéristiques décrites en référence à un procédé sont transposables, seules ou en combinaison, à un système.

## Revendications

1. Système de conditionnement de carburant (SC1 ; SC2 ; SC3 ; SC4) pour un moteur aérobie à hydrogène (M), le système comprenant :
- au moins une pompe à hydrogène (16 ; 116 ; 1116 ; Pae) configurée pour augmenter la pression d'hydrogène liquide provenant d'un réservoir,
- un ou plusieurs échangeurs de chaleur (24, 26, 28 ; 124, 126, 128 ; 1124 ; 224, 226, 228) configurés pour augmenter la température de l'hydrogène sous pression,
- un circuit d'alimentation en air (10G; 110E ; 1110E ; 210G), le système étant **caractérisé en ce qu'**il comprend également
- au moins un dispositif de combustion (32 ; 132 ; 1132 ; 232) configuré pour assurer une combustion partielle de l'hydrogène avec de l'air provenant du circuit d'alimentation en air afin de produire un carburant comprenant un mélange de gaz incluant de l'hydrogène gazeux et qui est dépourvu d'oxygène.

2. Système selon la revendication précédente, **caractérisé en ce que** ladite au moins une pompe à hydrogène (16 ; 116 ; 1116 ; Pae) est disposée en amont du ou des échangeurs de chaleur dans le sens de circulation de l'hydrogène à partir de ladite au moins une pompe à hydrogène.

3. Système selon la revendication 1 ou 2, **caractérisé en ce que** le ou les échangeurs de chaleur (24, 26, 28 ; 124, 126, 128 ; 1124 ; 224, 226, 228) sont configurés pour augmenter la température d'hydrogène au moins en partie par refroidissement d'un ou de plusieurs fluides.

4. Système selon l'une des revendications 1 à 3, **caractérisé en ce qu'**il comprend un circuit d'hydrogène en aval de ladite au moins une pompe à hydrogène (16 ; 116 ; 1116 ; Pae) dans le sens de circulation de l'hydrogène à partir de ladite au moins une pompe à hydrogène et un circuit de carburant en aval dudit au moins un dispositif de combustion, le ou les échangeurs de chaleur (24, 26, 28 ; 124, 126, 128 ; 1124 ; 224, 226, 228) étant connectés de manière fluidique entre les deux circuits afin d'augmenter la température de l'hydrogène dans le circuit d'hydrogène à partir de la chaleur du carburant produit par ledit au moins un dispositif de combustion (32 ; 132 ; 1132 ; 232) dans le circuit de carburant.

5. Système selon l'une des revendications 1 à 4, **caractérisé en ce qu'**il comprend, en aval de ladite au moins une pompe à hydrogène (16) dans le sens de circulation de l'hydrogène à partir de ladite au moins une pompe à hydrogène, une turbine (18) configurée pour assurer une détente partielle de l'hydrogène sous pression afin de fournir à ladite au moins une pompe à hydrogène (16), sous forme mécanique via un arbre de transmission (20) reliant la turbine à ladite au moins une pompe à hydrogène, au moins une partie de la puissance nécessaire au fonctionnement de ladite au moins une pompe à hydrogène.

6. Système selon l'une des revendications 1 à 4, **caractérisé en ce que** le système comprend, en aval dudit au moins un dispositif de combustion (1132) dans le sens de circulation du carburant à partir dudit au moins un dispositif de combustion, une turbine (1118) configurée pour assurer une détente partielle du carburant produit par ledit au moins un dispositif de combustion afin de fournir à ladite au moins une pompe à hydrogène (1116), sous forme mécanique via un arbre de transmission (1120) reliant la turbine à ladite au moins une pompe à hydrogène, au moins une partie de la puissance nécessaire au fonctionnement de ladite au moins une pompe à hydrogène.

7. Système selon la revendication 6, **caractérisé en ce que** le système comporte un circuit de contournement (110F) de la turbine muni d'une vanne (Vbp) qui raccorde un point amont (Pam) situé entre ledit au moins un dispositif de combustion et la turbine et un point aval (Pav) situé en aval de la turbine, la vanne (Vbp) étant configurée pour contrôler le passage du flux du carburant produit par ledit au moins un dispositif de combustion (1132) dans la turbine et/ou le circuit (110F) de contournement de la turbine.

8. Système selon l'une des revendications 5 à 7, **caractérisé en ce que** ladite au moins une pompe à hydrogène et la turbine forment conjointement une turbopompe.

9. Système selon l'une des revendications 1 à 5, **caractérisé en ce qu'**il comprend un séparateur de flux (30) disposé en amont dudit au moins un dispositif de combustion (32) dans le sens de circulation de l'hydrogène à partir de ladite au moins une pompe à hydrogène (16) et qui est configuré pour séparer l'hydrogène en un premier flux fourni audit au moins un dispositif de combustion (32) et un deuxième flux qui rejoint le carburant produit par ledit au moins un dispositif de combustion (32) en aval de ce dernier.

10. Système selon l'une des revendications 1 à 4, **caractérisé en ce que** ladite au moins une pompe à hydrogène (Pae) est une pompe à alimentation électrique et le système comprend au moins un moteur électrique (ME) configuré pour fournir à la pompe à alimentation électrique la totalité de la puissance nécessaire au fonctionnement de la pompe à alimentation électrique.

11. Système selon l'une des revendications précédentes, **caractérisé en ce que** le circuit d'alimentation en air (10G ; 110E ; 1110E ; 210G) est configuré pour transporter de l'air prélevé sur un moteur aérobie à hydrogène jusqu'audit au moins un dispositif de combustion et comprend un dispositif de surpression (38 ; 138 ; 1138 ; 238) configuré pour assurer une montée en pression de cet air en vue de l'introduire dans ledit au moins un dispositif de combustion.

12. Système selon l'une des revendications 1 à 10, **caractérisé en ce que** le système comprend un dispositif de compression (40 ; 140 ; 1140 ; 240) configuré pour augmenter la pression du carburant produit par ledit au moins un dispositif de combustion (32 ; 132 ; 1132 ; 232).

13. Système selon les revendications 4 et 12, **caractérisé en ce que** le dispositif de compression (40 ; 140 ; 1140 ; 240) est disposé dans le circuit de carburant en aval du ou des échangeurs de chaleur (24 ; 124 ; 1124 ; 224) qui sont connectés de manière fluidique entre le circuit de carburant, en aval dudit au moins un dispositif de combustion, et le circuit d'hydrogène, en aval de ladite au moins une pompe à hydrogène (16 ; 116 ; 1116 ; Pae).

14. Système d'alimentation en carburant (10 ; 110 ; 1110 ; 210) d'une chambre de combustion (CC) d'un moteur aérobie à hydrogène (M), **caractérisé en ce que** le système d'alimentation en carburant comprend :
- au moins un système de conditionnement de carburant (SC1 ; SC2 ; SC3 ; SC4) selon l'une des revendications précédentes,
- au moins un réservoir d'hydrogène liquide (12 ; 112 ; 1112 ; 212) configuré pour délivrer de l'hydrogène liquide à ladite au moins une pompe à hydrogène (16 ; 116 ; 1116 ; 216) dudit au moins un système de conditionnement de carburant (SC1 ; SC2 ; SC3 ; SC4), et
- un dispositif d'injection (DI) configuré pour injecter le carburant produit par ledit au moins un dispositif de combustion dudit au moins un système de conditionnement de carburant dans une chambre de combustion (CC) d'un moteur aérobie à hydrogène (M).

15. Système d'alimentation en carburant selon la revendication précédente, **caractérisé en ce qu'**il comprend une pompe (14 ; 114 ; 1114 ; 214) qui est configurée pour délivrer de l'hydrogène sous pression audit au moins un système de conditionnement de carburant.

16. Procédé de conditionnement de carburant pour un moteur aérobie à hydrogène (M), le procédé comprenant :
- une montée en pression d'hydrogène liquide (S2),
- une montée en température de l'hydrogène sous pression (S3), le procédé étant **caractérisé en ce qu'**il comprend également
- une combustion partielle (S7 ; S10) de l'hydrogène avec de l'air afin de produire un carburant comprenant un mélange de gaz incluant de l'hydrogène gazeux et qui est dépourvu d'oxygène.

17. Procédé selon la revendication précédente, **caractérisé en ce que** la montée en température d'hydrogène est obtenue au moins en partie en refroidissant (S4) un ou plusieurs fluides.

18. Procédé selon la revendication 16 ou 17, **caractérisé en ce que** la montée en température d'hydrogène est obtenue au moins en partie en refroidissant (S8 ; S12 ;S13) le carburant issu de la combustion partielle.

19. Procédé selon l'une des revendications 16 à 18, **caractérisé en ce qu'**il comprend une détente partielle (S5) de l'hydrogène pour fournir sous forme mécanique au moins une partie de la puissance nécessaire à la montée en pression d'hydrogène liquide avant la combustion partielle de l'hydrogène.

20. Procédé selon l'une des revendications 16 à 18, **caractérisé en ce qu'**il comprend une détente partielle (S11) du carburant produit par la combustion partielle de l'hydrogène pour fournir sous forme mécanique au moins une partie de la puissance nécessaire à la montée en pression d'hydrogène liquide avant la combustion partielle de l'hydrogène.

21. Procédé selon l'une des revendications 16 à 18, 20, **caractérisé en ce qu'**au moins une partie de la puissance nécessaire à la montée en pression d'hydrogène liquide est fournie sous forme électrique.

22. Procédé selon l'une des revendications 16 à 19, **caractérisé en ce qu'**il comprend la séparation (S6) d'un flux d'hydrogène qui a été soumis à une montée en pression et en température en un premier flux soumis à la combustion partielle et un deuxième flux qui rejoint le carburant produit la combustion partielle avant son injection dans une chambre de combustion d'un moteur.

23. Procédé selon l'une des revendications 16 à 18, 20, 21, **caractérisé en ce que** l'hydrogène qui a été soumis à une montée en pression et en température est directement soumis à la combustion partielle.

24. Procédé selon l'une des revendications précédentes, **caractérisé en ce qu'**il comprend une augmentation de la pression du carburant produit par la combustion partielle de l'hydrogène avec de l'air.

25. Procédé selon les revendications 18 et 24, **caractérisé en ce que** l'augmentation de la pression du carburant produit par la combustion partielle de l'hydrogène avec de l'air est réalisée après le refroidissement du carburant issu de la combustion partielle.

## Patentansprüche

1. Kraftstoffaufbereitungssystem (SC1; SC2; SC3; SC4) für einen luftatmenden Wasserstoffmotor (M), das System umfassend:
- mindestens eine Wasserstoffpumpe (16; 116; 1116; Pae), die konfiguriert ist, um den Druck von Flüssigwasserstoff aus einem Speicher zu erhöhen,
- einen oder mehrere Wärmetauscher (24, 26, 28; 124, 126, 128; 1124; 224, 226, 228), die konfiguriert sind, um die Temperatur des unter Druck stehenden Wasserstoffs zu erhöhen,
- einen Luftversorgungskreislauf (10G; 110E; 1110E; 210G),
wobei das System **dadurch gekennzeichnet ist, dass** es auch Folgendes umfasst
- mindestens eine Verbrennungsvorrichtung (32; 132; 1132; 232), die konfiguriert ist, um eine teilweise Verbrennung des Wasserstoffs mit Luft aus dem Luftversorgungskreislauf zu bewirken, um einen Kraftstoff zu erzeugen, umfassend ein Gasgemisch, das Wasserstoffgas beinhaltet und frei von Sauerstoff ist.

2. System nach dem vorherigen Anspruch, **dadurch gekennzeichnet, dass** die mindestens eine Wasserstoffpumpe (16; 116; 1116; Pae) stromaufwärts von dem Wärmetauscher oder den Wärmetauschern in der Zirkulationsrichtung des Wasserstoffs ab der mindestens einen Wasserstoffpumpe angeordnet ist.

3. System nach Anspruch 1 oder 2, **dadurch gekennzeichnet, dass** der oder die Wärmetauscher (24, 26, 28; 124, 126, 128; 1124; 224, 226, 228) konfiguriert sind, um die Temperatur des Wasserstoffs zumindest teilweise durch Kühlen eines oder mehrerer Fluide zu erhöhen.

4. System nach einem der Ansprüche 1 bis 3, **dadurch gekennzeichnet, dass** sie einen Wasserstoffkreislauf stromabwärts von der mindestens einen Wasserstoffpumpe (16; 116; 1116; Pae) in der Zirkulationsrichtung des Wasserstoffs ab der mindestens einen Wasserstoffpumpe und einen Kraftstoffkreislauf stromabwärts von der mindestens einen Verbrennungsvorrichtung umfasst, wobei der oder die Wärmetauscher (24, 26, 28; 124, 126, 128; 1124; 224, 226, 228) fluidisch zwischen den zwei Kreisläufen verbunden sind, um die Temperatur des Wasserstoffs in dem Wasserstoffkreislauf anhand der Wärme des Kraftstoffs zu erhöhen, der durch die mindestens eine Verbrennungsvorrichtung (32; 132; 1132; 232) in dem Kraftstoffkreislauf erzeugt wird.

5. System nach einem der Ansprüche 1 bis 4, **dadurch gekennzeichnet, dass** es stromabwärts von der mindestens einen Wasserstoffpumpe (16) in der Zirkulationsrichtung des Wasserstoffs von der mindestens einen Wasserstoffpumpe Folgendes umfasst eine Turbine (18), die konfiguriert ist, um eine teilweise Entspannung des unter Druck stehenden Wasserstoffs zu gewährleisten, um der mindestens einen Wasserstoffpumpe (16) in mechanischer Form über eine Antriebswelle (20), die die Turbine mit der mindestens einen Wasserstoffpumpe verbindet, mindestens einen Teil der für den Betrieb der mindestens einen Wasserstoffpumpe erforderlichen Leistung bereitzustellen.

6. System nach einem der Ansprüche 1 bis 4, **dadurch gekennzeichnet, dass** das System stromabwärts von der mindestens einen Verbrennungsvorrichtung (1132) in der Zirkulationsrichtung des Kraftstoffs von der mindestens einen Verbrennungsvorrichtung Folgendes umfasst eine Turbine (1118), die konfiguriert ist, um eine teilweise Entspannung des von der mindestens einen Verbrennungsvorrichtung erzeugten Kraftstoffs zu bewirken, um der mindestens einen Wasserstoffpumpe (1116) in mechanischer Form über eine Antriebswelle (1120), die die Turbine mit der mindestens einen Wasserstoffpumpe verbindet, mindestens einen Teil der für den Betrieb der mindestens einen Wasserstoffpumpe erforderlichen Leistung bereitzustellen.

7. System nach Anspruch 6, **dadurch gekennzeichnet, dass** das System einen Umgehungskreislauf (110F) der Turbine umfasst, der mit einem Ventil (Vbp) versehen ist, das einen stromaufwärtigen Punkt (Pam), der sich zwischen der mindestens einen Verbrennungsvorrichtung und der Turbine befindet, und einen stromabwärtigen Punkt (Pav), der sich stromabwärts von der Turbine befindet, verbindet, wobei das Ventil (Vbp) konfiguriert ist, um den Durchgang des von der mindestens einen Verbrennungsvorrichtung (1132) erzeugten Kraftstoffs in die Turbine und/oder den Umgehungskreislauf (110F) der Turbine zu steuern.

8. System nach einem der Ansprüche 5 bis 7, **dadurch gekennzeichnet, dass** die mindestens eine Wasserstoffpumpe und die Turbine zusammen eine Turbopumpe bilden.

9. System nach einem der Ansprüche 1 bis 5, **dadurch gekennzeichnet, dass** es einen Strömungsteiler (30) umfasst, der stromaufwärts von der mindestens einen Verbrennungsvorrichtung (32) in der Zirkulationsrichtung des Wasserstoffs von der mindestens einen Wasserstoffpumpe (16) angeordnet ist und der konfiguriert ist, um den Wasserstoff in einen ersten Strom, der der mindestens einen Verbrennungsvorrichtung (32) bereitgestellt wird, und einen zweiten Strom, der mit dem von der mindestens einen Verbrennungsvorrichtung (32) erzeugten Kraftstoff stromabwärts davon zusammengeführt wird, zu trennen.

10. System nach einem der Ansprüche 1 bis 4, **dadurch gekennzeichnet, dass** die mindestens eine Wasserstoffpumpe (Pae) eine strombetriebene Pumpe ist und das System mindestens einen Elektromotor (ME) umfasst, der konfiguriert ist, um der strombetriebenen Pumpe die gesamte Leistung bereitzustellen, die für den Betrieb der strombetriebenen Pumpe erforderlich ist.

11. System nach einem der vorherigen Ansprüche, **dadurch gekennzeichnet, dass** der Luftversorgungskreislauf (10G; 110E; 1110E; 210G) konfiguriert ist, um Luft, die von einem luftatmenden Wasserstoffmotor entnommen wird, zu der mindestens einen Verbrennungsvorrichtung zu transportieren, und eine Druckerhöhungsvorrichtung (38; 138; 1138; 238) umfasst, die konfiguriert ist, um einen Druckanstieg dieser Luft zu gewährleisten, um sie in die mindestens eine Verbrennungsvorrichtung einzuführen.

12. System nach einem der Ansprüche 1 bis 10,
**dadurch gekennzeichnet, dass** das System eine Verdichtungsvorrichtung (40; 140; 1140; 240) umfasst, die konfiguriert ist, um den Druck des von der mindestens einen Verbrennungsvorrichtung (32; 132; 1132; 232) erzeugten Kraftstoffs zu erhöhen.

13. System nach den Ansprüchen 4 und 12, **dadurch gekennzeichnet, dass** die Verdichtungsvorrichtung (40; 140; 1140; 240) in dem Kraftstoffsystem stromabwärts von dem Wärmetauscher oder den Wärmetauschern (24; 124; 1124; 224) angeordnet ist, die fluidisch zwischen dem Kraftstoffsystem stromabwärts von der mindestens einen Verbrennungsvorrichtung und dem Wasserstoffsystem stromabwärts von der mindestens einen Wasserstoffpumpe (16; 116; 1116; Pae) verbunden sind.

14. Kraftstoffzufuhrsystem (10; 110; 1110; 210) einer Brennkammer (CC) eines luftatmenden Wasserstoffmotors (M), **dadurch gekennzeichnet, dass** das Kraftstoffzufuhrsystem Folgendes umfasst:
- mindestens ein Kraftstoffaufbereitungssystem (SC1; SC2; SC3; SC4) nach einem der vorherigen Ansprüche,
- mindestens einen Flüssigwasserstoffspeicher (12; 112; 1112; 212), der konfiguriert ist, um der mindestens einen Wasserstoffpumpe (16; 116; 1116; 216) des mindestens einen Kraftstoffaufbereitungssystems (SC1; SC2; SC3; SC4) Flüssigwasserstoff bereitzustellen, und
- eine Einspritzvorrichtung (DI), die konfiguriert ist, um den von der mindestens einen Verbrennungsvorrichtung des mindestens einen Kraftstoffkonditionierungssystems erzeugten Kraftstoff in eine Brennkammer (CC) eines luftatmenden Wasserstoffmotors (M) einzuspritzen.

15. Kraftstoffzufuhrsystem nach dem vorherigen Anspruch, **dadurch gekennzeichnet, dass** es eine Pumpe (14; 114; 1114; 214) umfasst, die konfiguriert ist, um dem mindestens einen Kraftstoffaufbereitungssystem Wasserstoff unter Druck bereitzustellen.

16. Kraftstoffaufbereitungsverfahren für einen luftatmenden Wasserstoffmotor (M), das Verfahren umfassend:
- einen Druckanstieg von Flüssigwasserstoff (S2),
- einen Temperaturanstieg des unter Druck stehenden Wasserstoffs (S3), wobei das Verfahren **dadurch gekennzeichnet ist, dass** es auch Folgendes umfasst
- eine teilweise Verbrennung (S7; S10) des Wasserstoffs mit Luft, um einen Kraftstoff zu erzeugen, umfassend ein Gasgemisch, das Wasserstoffgas beinhaltet und frei von Sauerstoff ist.

17. Verfahren nach dem vorherigen Anspruch, **dadurch gekennzeichnet, dass** der Temperaturanstieg von Wasserstoff zumindest teilweise durch Kühlen (S4) eines oder mehrerer Fluide erlangt wird.

18. Verfahren nach Anspruch 16 oder 17, **dadurch gekennzeichnet, dass** der Temperaturanstieg von Wasserstoffs zumindest teilweise durch Kühlen (S8; S12; S13) des aus der Teilverbrennung stammenden Kraftstoffs erlangt wird.

19. Verfahren nach einem der Ansprüche 16 bis 18, **dadurch gekennzeichnet, dass** es eine teilweise Entspannung (S5) des Wasserstoffs umfasst, um in mechanischer Form mindestens einen Teil der Leistung bereitzustellen, die zum Druckanstieg von Flüssigwasserstoff vor der teilweisen Verbrennung des Wasserstoffs erforderlich ist.

20. Verfahren nach einem der Ansprüche 16 bis 18, **dadurch gekennzeichnet, dass** es eine teilweise Entspannung (S11) des durch die teilweise Verbrennung des Wasserstoffs erzeugten Kraftstoffs umfasst, um in mechanischer Form mindestens einen Teil der Leistung bereitzustellen, die zum Druckanstieg von Flüssigwasserstoff vor der teilweisen Verbrennung des Wasserstoffs erforderlich ist.

21. Verfahren nach einem der Ansprüche 16 bis 18, 20, **dadurch gekennzeichnet, dass** zumindest ein Teil der zum Druckanstieg von Flüssigwasserstoff benötigten Leistung in elektrischer Form bereitgestellt wird.

22. Verfahren nach einem der Ansprüche 16 bis 19, **dadurch gekennzeichnet, dass** es das Trennen (S6) eines Wasserstoffstroms, der einem Druck- und Temperaturanstieg unterzogen wurde, in einen ersten Strom, der einer teilweisen Verbrennung unterzogen ist, und einen zweiten Strom, der mit dem Kraftstoff, der die teilweise Verbrennung erzeugt, vor dessen Einspritzung in eine Verbrennungskammer eines Motors zusammengeführt wird, umfasst.

23. Verfahren nach einem der Ansprüche 16 bis 18, 20, 21, **dadurch gekennzeichnet, dass** der Wasserstoff, der einem Druck- und Temperaturanstieg unterzogen wurde, direkt einer teilweisen Verbrennung unterzogen wird.

24. Verfahren nach einem der vorherigen Ansprüche, **dadurch gekennzeichnet, dass** es eine Erhöhung des Drucks des Kraftstoffs umfasst, der durch die teilweise Verbrennung von Wasserstoff mit Luft erzeugt wird.

25. Verfahren nach den Ansprüchen 18 und 24, **dadurch gekennzeichnet, dass** die Erhöhung des Drucks des Kraftstoffs, der durch die partielle Verbrennung von Wasserstoff mit Luft erzeugt wird, nach dem Abkühlen des Kraftstoffs aus der teilweise Verbrennung erfolgt.

## Claims

1. A fuel conditioning system (SC1; SC2; SC3; SC4) for an aerobic hydrogen engine (M), the system comprising:
- at least one hydrogen pump (16; 116; 1116; Pae) configured to increase the liquid hydrogen pressure coming from a tank,
- one or several heat exchanger(s) (24, 26, 28; 124, 126, 128; 1124; 224, 226, 228) configured to increase the temperature of the pressurized hydrogen,
- an air supply circuit (10G; 110E; 1110E; 210G),
the system being **characterized in that** it further comprises
- at least one combustion device (32; 132; 1132; 232) configured to ensure a partial combustion of the hydrogen with air coming from the air supply circuit in order to produce a fuel comprising a gas mixture including gaseous hydrogen and which is devoid of oxygen.

2. The system according to the preceding claim, **characterized in that** said at least one hydrogen pump (16; 116; 1116; Pae) is disposed upstream of the heat exchanger(s) in the direction of circulation of the hydrogen from said at least one hydrogen pump.

3. The system according to claim 1 or 2, **characterized in that** the heat exchanger(s) (24, 26, 28; 124, 126, 128; 1124; 224, 226, 228) is/are configured to increase the hydrogen temperature at least partly by cooling one or several fluid(s).

4. The system according to any of claims 1 to 3, **characterized in that** it comprises a hydrogen circuit downstream of said at least one hydrogen pump (16; 116; 1116; Pae) in the direction of circulation of the hydrogen from said at least one hydrogen pump and a fuel circuit downstream of said at least one combustion device, the heat exchanger(s) (24, 26, 28; 124,126,128; 1124; 224, 226, 228) being fluidly connected between the two circuits in order to increase the temperature of the hydrogen in the hydrogen circuit from the heat of the fuel produced by said at least one combustion device (32; 132; 1132; 232) in the fuel circuit.

5. The system according to any of claims 1 to 4, **characterized in that** it comprises, downstream of said at least one hydrogen pump (16) in the direction of circulation of the hydrogen from said at least one hydrogen pump, a turbine (18) configured to ensure partial expansion of the pressurized hydrogen in order to provide to said at least one hydrogen pump (16), in mechanical form via a transmission shaft (20) connecting the turbine to said at least one hydrogen pump, at least part of the power necessary for the operation of said at least one hydrogen pump.

6. The system according to any of claims 1 to 4, **characterized in that** the system comprises, downstream of said at least one combustion device (1132) in the direction of circulation of the fuel from said at least one combustion device, a turbine (1118) configured to ensure partial expansion of the fuel produced by said at least one combustion device in order to provide to said at least one hydrogen pump (1116), in mechanical form via a transmission shaft (1120) connecting the turbine to said at least one hydrogen pump, at least part of the power necessary for the operation of said at least one hydrogen pump.

7. The system according to claim 6, **characterized in that** the system includes a circuit (110F) for bypassing the turbine, provided with a valve (Vbp) which connects an upstream point (Pam) located between said at least one combustion device and the turbine and a downstream point (Pav) located downstream of the turbine, the valve (Vbp) being configured to control the passage of the flow of fuel produced by said at least one combustion device (1132) into the turbine and /or the turbine bypass circuit (110F).

8. The system according to any of claims 5 to 7, **characterized in that** said at least one hydrogen pump and the turbine together form a turbopump.

9. The system according to any of claims 1 to 5, **characterized in that** it comprises a flow separator (30) disposed upstream of said at least one combustion device (32) in the direction of circulation of the hydrogen from said at least one hydrogen pump (16) and which is configured to separate the hydrogen into a first flow provided to said at least one combustion device (32) and a second flow which joins the fuel produced by said at least one combustion device (32) downstream of the latter.

10. The system according to any of claims 1 to 4, **characterized in that** said at least one hydrogen pump (Pae) is an electrically-powered pump and the system comprises at least one electric motor (ME) configured to provide to the electrically-powered pump all of the power necessary for the operation of the electrically-powered pump.

11. The system according to any of the preceding claims, **characterized in that** the air supply circuit (10G; 110E; 1110E; 210G) is configured to transport air taken from an aerobic hydrogen engine to said at least one combustion device and comprises a pressure relief device (38; 138; 1138; 238) configured to ensure a rise in the pressure of this air with a view to introducing it into said at least one combustion device.

12. The system according to any of claims 1 to 10, **characterized in that** the system comprises a compression device (40; 140; 1140; 240) configured to increase the pressure of the fuel produced by said at least one combustion device (32; 132; 1132; 232).

13. The system according to claims 4 and 12, **characterized in that** the compression device (40; 140; 1140; 240) is disposed in the fuel circuit downstream of the heat exchanger(s) (24; 124; 1124; 224) which are fluidly connected between the fuel circuit, downstream of said at least one combustion device, and the hydrogen circuit, downstream of said at least one hydrogen pump (16; 116; 1116; Pae).

14. A system (10; 110; 1110; 210) for supplying fuel to a combustion chamber (CC) of an aerobic hydrogen engine (M), **characterized in that** the fuel supply system comprises:
- at least one fuel conditioning system (SC1; SC2; SC3; SC4) according to any of the preceding claims,
- at least one liquid hydrogen tank (12; 112; 1112; 212) configured to deliver liquid hydrogen to said at least one hydrogen pump (16; 116; 1116; 216) of said at least one fuel conditioning system (SC1; SC2; SC3; SC4), and
- an injection device (DI) configured to inject the fuel produced by said at least one combustion device of said at least one fuel conditioning system into a combustion chamber (CC) of an aerobic hydrogen engine (M).

15. The fuel supply system according to the preceding claim, **characterized in that** it comprises a pump (14; 114; 1114; 214) which is configured to deliver pressurized hydrogen to said at least one fuel conditioning system.

16. A fuel conditioning method for an aerobic hydrogen engine (M), the method comprising:
- a rise in the pressure of liquid hydrogen (S2),
- a rise in the temperature of the pressurized hydrogen (S3),
the method being **characterized in that** it further comprises
- a partial combustion (S7; S10) of the hydrogen with air in order to produce a fuel comprising a gas mixture including gaseous hydrogen and which is devoid of oxygen.

17. The method according to the preceding claim, **characterized in that** the hydrogen temperature rise is obtained at least partly by cooling (S4) one or several fluid(s).

18. The method according to claim 16 or 17, **characterized in that** the hydrogen temperature rise is obtained at least partly by cooling (S8; S12; S13) the fuel resulting from the partial combustion.

19. The method according to any of claims 16 to 18, **characterized in that** it comprises a partial expansion (S5) of the hydrogen to provide in mechanical form at least part of the power necessary for the rise in the liquid hydrogen pressure before the partial combustion of the hydrogen.

20. The method according to any of claims 16 to 18, **characterized in that** it comprises a partial expansion (S11) of the fuel produced by the partial combustion of hydrogen to provide in mechanical form at least part of the power necessary for the rise in the liquid hydrogen pressure before the partial combustion of the hydrogen.

21. The method according to any of claims 16 to 18, 20, **characterized in that** at least part of the power necessary for the liquid hydrogen pressure rise is provided in electrical form.

22. The method according to any of claims 16 to 19, **characterized in that** it comprises the separation (S6) of a hydrogen flow that has been subjected to a pressure and temperature rise into a first flow subjected to the partial combustion and a second flow which joins the fuel produced by the partial combustion before its injection into a combustion chamber of an engine.

23. The method according to any of claims 16 to 18, 20, 21, **characterized in that** the hydrogen that has been subjected to a pressure and temperature rise is directly subjected to the partial combustion.

24. The method according to any of the preceding claims, **characterized in that** it comprises an increase in the pressure of the fuel produced by the partial combustion of the hydrogen with air.

25. The method according to claims 18 and 24, **characterized in that** the increase in the pressure of the fuel produced by the partial combustion of the hydrogen with air is carried out after the cooling of the fuel resulting from the partial combustion.
